# EUROPEAN PATENT APPLICATION

(11) **EP 2 161 162 A1**
(43) Date of publication of application: **10.03.2010**
(21) Application number: 09168538.8
(22) Date of filing: 25.08.2009
(51) Int. Cl.: B60P 1/02, B60P 3/40

(54) **Universal vehicle**

(30) Priority: 03.09.2008 US 203607
(71) Applicant: General Electric Company, Schenectady, NY 12345 (US)
(72) Inventor: Puls, Ingo, 49191 Belm (DE)
(74) Representative: Bedford, Grant Richard

(57) **Abstract**

A transport vehicle 100 is provided including a U-shaped chassis 110 adapted for receiving and holding a component carrier and a lifting mechanism adapted for lifting the component carrier received by the chassis. Further, a component carrier 700 is provided, which is adapted for carrying loads. The component carrier includes a lifting portion for a transport vehicle and a support portion having a support surface adapted for supporting the load to be carried. Moreover, a system 1400 is provided including at least one transport module in a U-shape having a receiver portion adapted for receiving a support module 1320, the transport module comprising a raising mechanism adapted for raising the support module and at least one support module adapted to fit in the receiver portion of the transport module 1310 and adapted to support loads to be transported.

## Description

The present disclosure relates to a universal vehicle for transporting heavy components. More specifically, it relates to a vehicle for transporting and lifting a component carrier. The present disclosure relates also to a component carrier for the vehicle and a system including the vehicle and the component carrier.

During recent years, the demand for wind energy systems has increased. Therefore, wind energy systems are planned and erected at locations, which can provide a high energy yield, but which may be hard to reach. For instance, whole wind parks are planned to be built in the sea. Another example is hills and mountains, whose tops are hard to reach regions providing a high amount of wind.

For the installation of energy systems, as the above mentioned wind energy system or power plants, very heavy components have to be transported, often in the range of several dozen tons. The transport of heavy components, such as parts of energy systems or drilling platforms, includes strong efforts concerning force and handling. An additional aggravating factor is that the components often have to be transported in regions which are not easy to access as the aforementioned installation of wind energy systems on the top of mountains or hills. But also the transport of the components during fabrication and sub-assembly is a challenge due to the high weight of the components.

Due to the increasing demand of the wind energy systems, the transport of components has become a bottle-neck in production halls and, therefore, limits productivity. Typically, wind turbine components are transported by cranes. This causes problems because the components are often heavier than the design load of the cranes. As a nacelle with a lifting beam may have considerable weight, the cranes may be overloaded and transport of this nacelle cannot be guaranteed with adequate safety.

In view of the above, a transport vehicle including a structure adapted for receiving and holding a component carrier and a lifting mechanism adapted for lifting the component carrier received by the chassis is provided.

According to a further aspect of the disclosure, a component carrier is provided, which is adapted for carrying loads, including a lifting portion for a transport vehicle, the vehicle comprising a structure adapted for receiving and holding the component carrier and a lifting mechanism adapted for lifting the component carrier received by the chassis and further including a support portion having a support surface adapted for supporting the load to be carried.

According to another aspect of the disclosure, a system is provided including at least one transport module including a receiver portion adapted for receiving a support module, the transport module comprising a raising mechanism adapted for raising the support module and at least one support module adapted to fit in the receiver portion of the transport module and adapted to support loads to be transported.

Various aspects, advantages and features of the present disclosure are apparent from the dependent claims, the description and the accompanying drawings, in which:
Fig. 1a shows a top view in the x-y-plane of a transport vehicle according to embodiments described herein;
Fig. 1b shows a sectional view in the z-y-plane along line A-A of the transport vehicle of Fig. 1a according to embodiments described herein;
Fig. 2 shows a top view in the x-y-plane of a track transport track vehicle according to embodiments described herein;
Fig. 3 shows a sectional view in the z-y-plane of a component carrier according to embodiments described herein;
Fig. 4a shows a sectional view in the z-y-plane of a component carrier having a transport ring according to embodiments described herein;
Fig. 4b shows a top view in the x-y-plane of the component carrier of Fig. 1a according to embodiments described herein;
Fig. 5 shows a sectional view in the z-y-plane of a system according to embodiments described herein;
Fig. 6a shows a view in the x-z-plane of a component carrier having a connection for a trailer connected according to embodiments described herein;
Fig. 6b shows a view in the x-z-plane of a system having a trailer connected according to embodiments described herein;
Fig. 7 shows a view in the x-z-plane of an arrangement having two systems transporting a component according to embodiments described herein; and

Reference will now be made in detail to the various embodiments, one or more examples of which are illustrated in the figures. Each example is provided by way of explanation, and is not meant as a limitation. For example, features illustrated or described as part of one embodiment can be used on or in conjunction with other embodiments to yield yet a further embodiment. It is intended that the present disclosure includes such modifications and variations.

During the assembly, production and pre-assembly of heavy machinery components, the components have to be transported within or between locations that do not allow for conventional transport systems. For example, a truck may not be used within a production hall or on difficult terrain. As explained above, cranes are a possibility to transport the components within a certain radius but may be overloaded with regard to the weight of new developed components.

Further, using cranes, a reload is necessary for transporting a component from the inside of a production hall to the outside of a production hall and further on a company area.

In this description, the term "heavy" means in the range of several dozen tons. For instance, a heavy weight is typically above 10 t, more typically above 30 tons and even more typically above 50 t. According to embodiments described herein, the weight of a heavy component as described herein is typically below 250 t, more typically below 200 t and even more typically below 150 t.

The term "long component" refers in this description to components which are typically longer than 5 m, more typically longer than 10 m and even more typically longer than 15 m.

The term "load" as referred to herein includes heavy machinery components, components of power plants, components of a wind energy system such as nacelle, tower, blade, generator, and so on. The listed components are to be understood as an example and are not limiting. Any load can be carried with the system described herein.

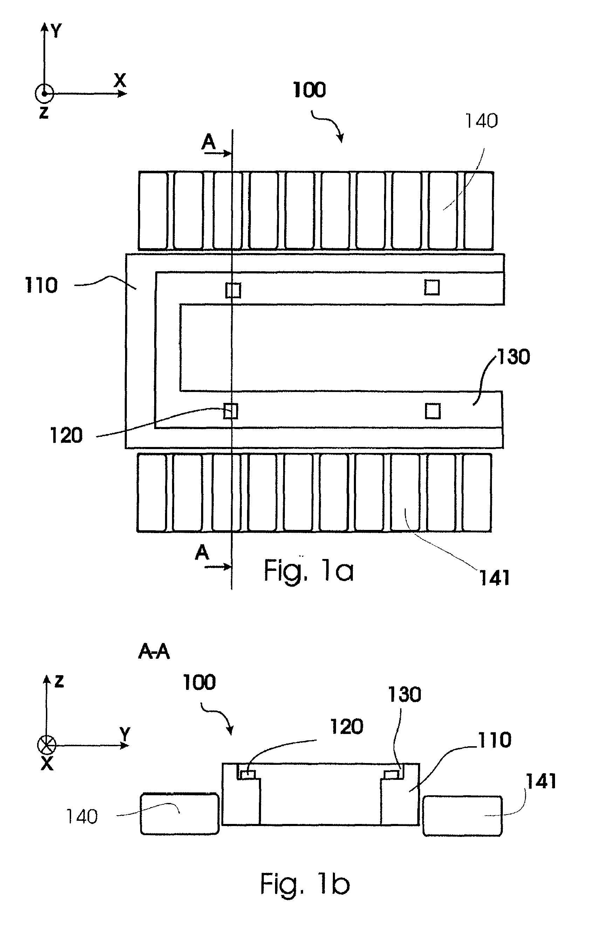

Fig. 1a shows an embodiment of a transport vehicle 100. The vehicle 100 includes a U-shaped chassis 110, a lifting mechanism 120 for lifting a component carrier, and two tracks 140, 141. It will be understood by those skilled in the art that the U-shape of the chassis is only one of many shapes the receptacle or receiving structure may assume. To give further non-limiting examples, the chassis may also have a W-shape or a T-shape. Furthermore, it will be understood by those skilled on the art that it is not necessary that the receptacle is formed by the chassis of the vehicle. For example, the receptacle may also be formed as a separate part of the vehicle attached to the chassis or even may be formed as a trailer of the vehicle.

The tracks 140, 141 act as motion units and move the U-shaped chassis 110. Therefore, the tracks 140 and 141 include each, e.g., 20 chain links, which are connected to one another in order to form a track. It will be understood by those skilled in the art that any suitable number of chain links may be used. The tracks 140, 141 are connected to the U-shaped chassis 110, for instance by means of axis (not shown). A recess 130 is formed in the U-shaped chassis 110 to receive and hold a component carrier. The lifting mechanism 120 includes four parts. The four parts of the lifting mechanism can be four independent hydraulic cylinders, which can be controlled either independently or commonly by a control unit (not shown).

Methods for moving a trailer according to embodiments described herein include unloading a trailer from a truck, and fixing a wheeled device to the trailer to move the trailer in a rugged terrain. Methods according to further embodiments are adapted for moving a wind turbine component in a rugged terrain and include unloading the component from a truck, and removably fixing a wheeled device to the component to move the component in a rugged terrain. Methods according to further embodiments are related to removing an assembly bottleneck in an assembly of a wind turbine, and include providing a wheeled vehicle to move components greater than 1 ton to a location in rugged terrain.

In Fig. 1b, a sectional view of the transport vehicle of Fig. 1a is shown in the z-y-plane. In this view, the recess 130 can be seen in more detail. The recess 130 is formed as a rectangular notch. The lifting mechanism 120 is formed in the recess in order to lift the component carrier to be transported by a ground clearance of about 2 inches.

According to some embodiments, which can be combined with other embodiments described herein, the recess may have a pattern, i.e. the patterned recess 130 may include rectangular, non continuous recesses in regular distances. According to other embodiments, the patterned recess may include recesses in another shape than rectangular, for instance, in a round shape or the like. The shape of the recesses depends on the shape of the component carrier to be transported. Due to production techniques, it may be more efficient to choose another form than rectangular. According to yet other embodiments, the distance between the recesses may be irregular, if this is desirable.

According to one embodiment, the recess may be replaced by holes, pins, or any other structure allowing for receiving and holding a component carrier. The patterned recess can act as a locking mechanism to lock the component carrier to the vehicle. Typically, the recess is adapted for locking a component carrier to the transport vehicle by preventing a movement of the component carrier relative to the transport vehicle.

According to embodiments described herein, the lifting mechanism may include more or less than four parts.

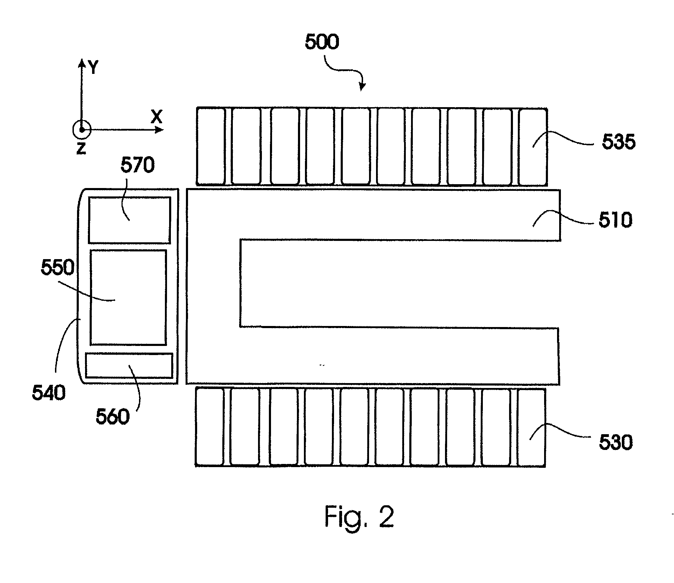

Fig. 2 shows a transport vehicle 500 having a U-shaped chassis 510, a lifting mechanism (not shown), and a drive unit 540. The drive unit 540 is adapted for driving the motion units 530, 535. Therefore, the U-shaped chassis can be moved. The drive unit 540 includes a motor block 550, a tank 560 and a fluid storage 570 for a hydraulic fluid. The hydraulic fluid in the fluid storage can be used to feed a hydraulic lifting mechanism.

According to one embodiment, the drive unit 540 includes a remote control, which controls the action of the motor, the transmission, the hydraulic lifting mechanism and so on.

Typically, the motor block 550 includes a motor, a transmission, a starter, a pump and the like.

A person skilled in the art will know that not only tracks can be used for moving the transport vehicle, but also wheels or the like. Further, the motion units can be more than two, for instance four or six.

Typically, the transport vehicle has a velocity between 0.5 mph and 12 mph (about 1 km/h to 20 km/h), more typically between 2 mph (3 km/h) and 9 mph (15 km/h) and even more typically between 3 mph (5 km/h) and 6 mph (10 km/h).

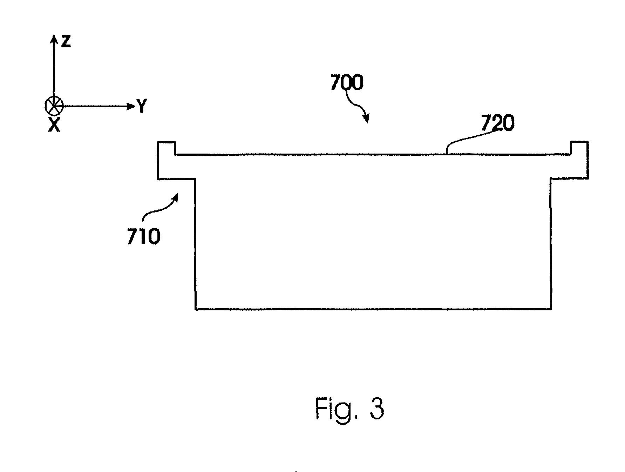

Fig. 3 shows a component carrier 700, which is adapted for being transported by the vehicle described above. The component carrier has a lifting portion 710 and a supporting portion 720. The lifting portion is adapted for engaging with a lifting mechanism of a transport vehicle as described above. The supporting surface 720 is adapted for receiving a load. In this embodiment, the component carrier is adapted for carrying a flat load.

Generally, the surface of the supporting portion is shaped in order to support the load to be carried in the best possible way. The term "best possible way" in this context should be understood as the way, by which a component can safely and efficiently be carried. For instance, this may require locking means (not shown) to prevent the component to be carried from falling from the component carrier or the shape of the component carrier, which allows an easy loading of the component.

Locking means can be recesses, holes, pins or the like, which engage with a respective part of a component to be carried.

According to embodiments, which can be combined with other embodiments, the component carrier may also include a locking portion (not shown) to engage with a locking mechanism of the vehicle. The locking portion may be a recess, a screw hole, a fastening bar or the like.

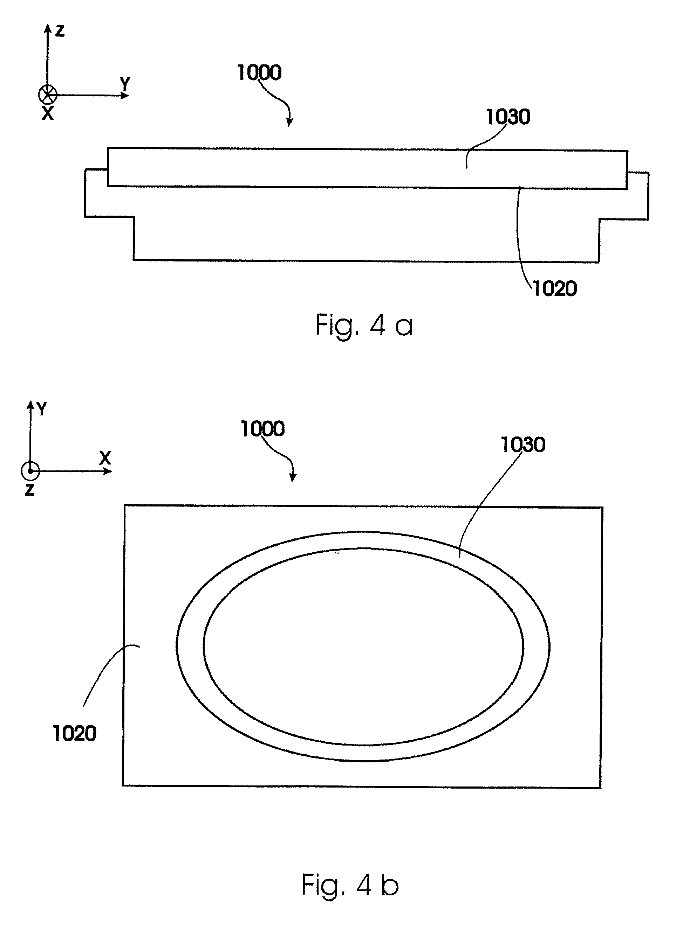

In Fig. 4a, a component carrier 1000 is shown having a transport ring 1030. The supporting portion 1020 is formed in a manner, that the transport ring 1030 can be positioned on the supporting surface. A transport ring can be used for carrying loads with a round shape. The load is located on the transport ring and is thus prevented from moving relative to the carrier.

In Fig. 4b, the component carrier 1000 of Fig. 10a is shown in a top view in the x-y-plane. The transport ring 1030 may be a separate part being only positioned on the supporting portion 1020 of the component carrier. Alternatively, the transport ring may be provided by the shape of the supporting portion 1020.

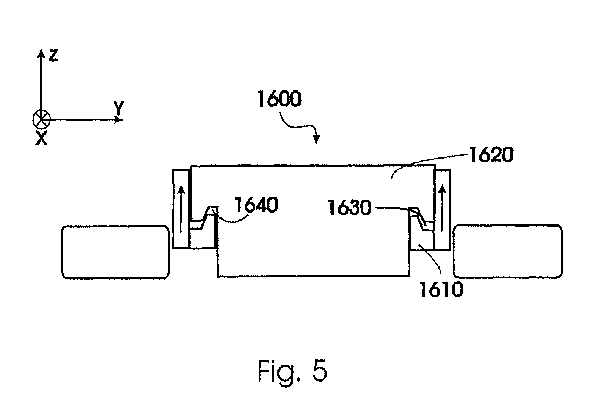

In Fig. 5, a system 1600 is shown including a transport module 1610 and a support module 1620. As can be seen in Fig. 5, a receiver portion 1630 is provided in the transport module. The support module 1620 fits in the receiver portion 1630 and can be raised by a raising mechanism (not shown) of the transport module. The raising mechanism is adapted for being positioned below at least a part of the support module.The surface of the support module 1620 is flat for receiving a load of arbitrary, for instance a flat shape.

When the support module fits in the receiver portion of the transport module, the transport module surrounds the support module at least partially.

The support module may have a hydraulic device (not shown). Further, the support module may have a raising device (not shown), which may be a hydraulic raising device. The hydraulic device may be connected to the hydraulic raising device in order to feed the raising device. With the raising device, it is possible to raise loads.

According to some embodiments, the hydraulic device of the support module may be connected to a hydraulic system of the transport module.

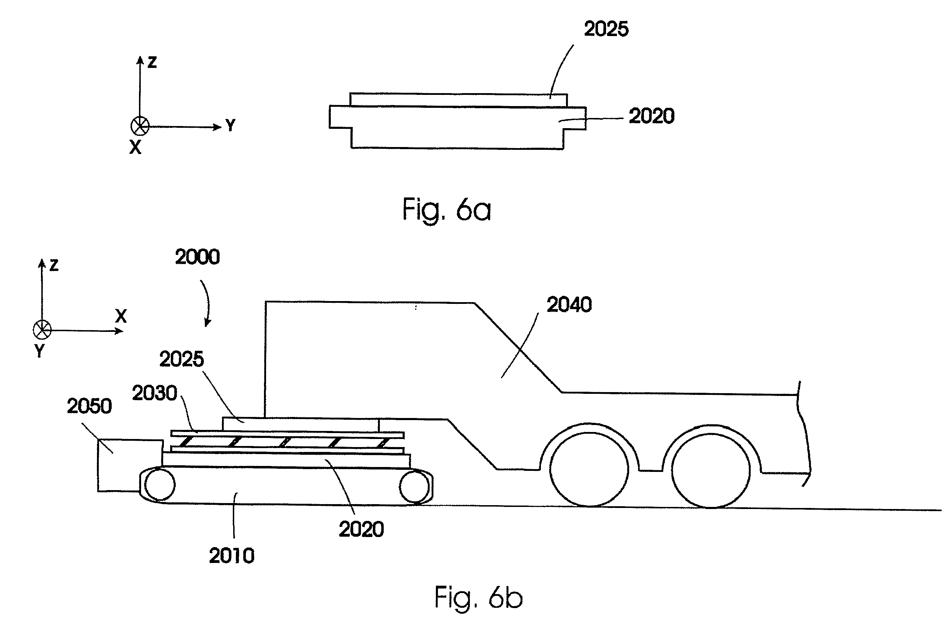

Fig. 6a shows a support module 2020, which is adapted for being connected to a trailer. In Fig. 6a, a connection device 2025 is shown, which is mounted on the support module 2020. The support module 2020 has receiver portions (not shown) for receiving the connection device 2025. The connection device 2025 is attached to the support module by screws. In this embodiment, the trailer is a trailer from a truck.

According to some embodiments, the connection to the trailer is arranged by the shape of the surface of the support module, the geometry of the support module, by locking mechanisms on the support module, by a connection device as explained above or the like.

In Fig. 6b, a system 2000 with a transport module 2010 and a support module 2020 is shown in the z-x-plane. On the transport module 2010, the support module 2020 is positioned and locked as described above. Furthermore, the transport module 2110 includes a drive unit 2050. In this embodiment, the drive unit 2050 is a drive unit as described above with respect to the transport vehicle. The support module 2020 has a hydraulic raising device 2030, which is connected to a hydraulic system and can be controlled by a controller (not shown). Further, a connection device 2025 is provided, which is adapted for connecting the system 2000 to a trailer 2040.

According to some embodiments, the system 2000 is able to move the trailer, which is charged with components of a wind energy system. Therefore, it becomes possible to further transport the loads without reloading it, even if transport means for roads cannot be used anymore. For instance, it is possible to transport a wind energy component to the base of a hill or a mountain with transport means like trucks. When the slope becomes too steep or the terrain too difficult, it is possible, to connect the trailer to the system according to embodiments described herein and transport the component further on. This approach allows a time and cost reduction, because a reload of the component is not necessary.

The person skilled in the art will understand that embodiments described above can be used in the system 2000. For instance, a remote control can be used to control the movement and the transportation of the trailer 240.

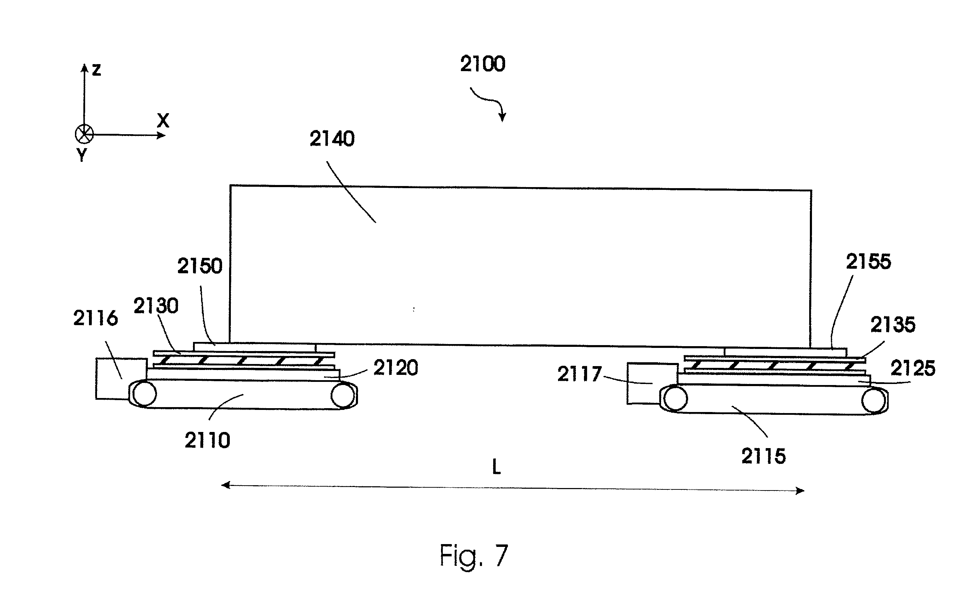

Fig. 7 shows a system 2100 comprising two transport modules and two support modules for transporting long loads. The transport modules 2110 and 2115 are arranged in a certain distance L to one another. The distance L depends on the length of the load to be carried. The transport modules 2110 and 2115 include two drive units 2116 and 2117. Each drive units may be a drive unit as described above with respect to the transport vehicle.

Typically, on the transport modules 2110 and 2115, two support modules 2120 and 2125 are mounted each having a hydraulic device (not shown). In this embodiment, the hydraulic devices are connected to hydraulic raising devices 2130 and 2135. On the hydraulic raising devices 2130 and 2135, receptacle 2150 and 2155 are mounted. The receptacles 2150 and 2155 serve for fixing or holding the long load 2140.

According to other embodiments, the receptacles 2150 and 2155 are formed on the surface of the hydraulic raising devices. According to other embodiments, the receptacles may be formed or mounted on the supporting surface of the support module.

With the system 2100, it becomes possible to transport long loads 2140, such as long components of a wind energy system. Exemplarily, a tower or a part of a tower of a wind energy system is transported in Fig. 7.

According to some embodiments, it is possible to raise long components from the substantially horizontal direction to the substantially vertical direction.

According to some embodiments, more than two transport and support modules can be used, for instance, four transport and support modules, if the geometry and the weight of the load requires the use of four transport and support modules.

According to some embodiments described herein, the transport module such as a transport vehicle can be adapted to a specific support module. According to other embodiments, the transport module such as a transport vehicle can be used for several types of support modules.

According to some embodiments, a system as described above is adapted for transporting heavy loads, such as loads of about 90 t.

The universal vehicle described herein can be used to transport machinery components within a production hall, from the production hall to an outside area and on difficult terrain. As the crane capacity is a bottle-neck in a production hall for heavy machinery components, the crane loads and costs can be reduced by using a universal vehicle according to embodiments described herein.

A heavy machinery component, such as for instance a nacelle of a wind energy system, can be placed on a component carrier during production. With the universal vehicle described above, it becomes possible to transport the nacelle on the component carrier until it reaches its final destination. A time and cost consuming reload of the nacelle can be avoided. On the component carrier according to embodiments described herein, the component, such as a nacelle can be transported from the inside of a production hall to the outside and further on.

Further, it is possible to use one or more universal vehicles according to embodiments to transport long components, for instance a tower segment of a wind energy system.

According to embodiments described herein, the universal vehicle can also be connected to a trailer of a truck to further reduce reload time and costs.

This written description uses examples to disclose the invention, including the preferred mode, and also to enable any person skilled in the art to make and use the invention. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A transport vehicle comprising:
   - structure adapted for receiving and holding a component carrier;
   - a lifting mechanism adapted for lifting the component carrier received by the chassis.
2. The vehicle according to clause 1, wherein said structure is formed by the vehicle chassis.
3. The vehicle according to any preceding clause, wherein the structure is U-shaped, T-shaped, or W-shaped.
4. The vehicle according to any preceding clause, wherein the vehicle comprises at least two motion units and a drive unit, said drive unit is adapted for driving the motion units.
5. The vehicle according to any preceding clause, wherein the drive unit is positioned at a connecting side of a U-shaped or W-shaped chassis.
6. The vehicle according to any preceding clause, wherein the lifting mechanism is a hydraulic lifting mechanism.
7. The vehicle according to any preceding clause, wherein the lifting mechanism has on each of the opposite, substantially parallel sides of the U-shape or W shaped chassis at least one hydraulic cylinder.
8. The vehicle according to any preceding clause, wherein the lifting mechanism is adapted to lift said component carrier by a ground clearance of at least 2 inches.
9. The vehicle according to any preceding clause, wherein the vehicle has a locking mechanism to lock the component carrier to the vehicle.
10. The vehicle according to any preceding clause, further comprising a remote control adapted for driving and controlling the vehicle.
11. A component carrier adapted for carrying loads comprising
   - a lifting portion for a transport vehicle, the vehicle comprising a structure adapted for receiving and holding the component carrier and a lifting mechanism adapted for lifting the component carrier received by the structure;
   - a support portion having a support surface adapted for supporting the load to be carried.
12. The carrier according to clause 11, wherein the support surface of the support portion is adapted for receiving differently shaped loads.
13. The carrier according to clause 11 or 12, wherein the carrier further comprises a transport ring adapted for holding the load to be carried.
14. The carrier according to any of clauses 11 to 13, further comprising at least one locking device to lock the load to the carrier.
15. The carrier according to any of clauses 11 to 14, further comprising a locking portion to engage with a locking mechanism of the vehicle.
16. The carrier according to any of clauses 11 to 15, wherein the component carrier comprises a lifting device to lift the loads to be carried.
17. The carrier according to any of clauses 11 to 16, wherein the lifting device is a hydraulic lifting device.
18. The carrier according to any of clauses 11 to 17, wherein the vehicle further comprises a hydraulic system and wherein the hydraulic device of the carrier is in connection with the hydraulic system of the vehicle.
19. The carrier according to any of clauses 11 to 18, wherein the carrier has a connection portion adapted for connecting a trailer.
20. A system comprising
   at least one transport module comprising a receiver portion adapted for receiving a support module, the transport module comprising a raising mechanism adapted for raising the support module;
   at least one support module adapted to fit in the receiver portion of the transport module and adapted to support loads to be transported.
21. The system according to clause 20, wherein the receiver portion is U-shaped, T-shaped, or W-shaped.
22. The system according to clause 20 or 21, wherein the transport module and the support module have engaging mechanisms adapted for engaging with each other.
23. The system according to any of clauses 20 to 22, wherein the transport module surrounds the support module at least partially and the raising mechanism is adapted for being positioned below at least a part of the support module.
24. The system according to any of clauses 20 to 23, wherein the system is adapted for being connected to a trailer.
25. The system according to any of clauses 20 to 24, adapted for transporting parts of a wind energy system.
26. The system according to any of clauses 20 to 25, wherein the system comprises two transport modules and two support modules adapted for transporting one of the group consisting of a tower of a wind energy system, a nacelle of a wind energy system, a blade of a turbine, and a transformer, and adapted for raising the respective ends of the transported load with the respective one of the two transport and support modules.
27. The system according to any of clauses 20 to 26, wherein the system is adapted for transporting loads in a range that includes 90 tons.
28. The system according to any of clauses 20 to 27, wherein the support module further comprises a raising device.
29. A method for moving a trailer comprising:
   unloading a trailer from a truck; and
   fixing a wheeled device to the trailer to move the trailer in a rugged terrain.
30. A method for moving a wind turbine component in a rugged terrain comprising:
   unloading the component from a truck; and
   removably fixing a wheeled device to the component to move the component in a rugged terrain.
31. A method of removing an assembly bottleneck in an assembly of a wind turbine comprising:
   providing a wheeled vehicle to move components greater than 1 ton to a location in rugged terrain.

## Claims

1. A transport vehicle (100) comprising:
• a structure adapted for receiving and holding a component carrier (700);
• a lifting mechanism (220) adapted for lifting the component carrier received by a chassis (210).

2. The vehicle (100) according to claim 1, wherein said structure is formed by the vehicle chassis (210).

3. The vehicle (100) according to claim 1 or 2, wherein the structure is U-shaped, T-shaped, or W-shaped.

4. The vehicle (100) according to any preceding claim, wherein the vehicle (100) comprises at least two motion units (530) and a drive unit (540), said drive unit is adapted for driving the motion units.

5. The vehicle (100) according to any of the preceding claims, wherein the lifting mechanism (220) is a hydraulic lifting mechanism.

6. The vehicle (100) according to any of the preceding claims, wherein the vehicle (100) has a locking mechanism (1130) to lock the component carrier to the vehicle.

7. A component carrier (700, 1100) adapted for carrying loads comprising
• a lifting portion for a transport vehicle (100), the vehicle comprising structure adapted for receiving and holding the component carrier and a lifting mechanism adapted for lifting the component carrier received by a chassis (210);
• a support portion (1220) having a support surface adapted for supporting the load to be carried.

8. The carrier (700, 1100) according to claim 7, wherein the carrier further comprises a transport ring (1030) adapted for holding the load to be carried.

9. The carrier (700, 1100) according to any of claims 7 to 8, further comprising a locking portion (1130) to engage with a locking mechanism of the vehicle.

10. The carrier (700, 1100) according to any of claims 7 to 9, wherein the component carrier comprises a lifting device to lift the loads to be carried.

11. The carrier (700, 1100) according to any of claims 7 to 10, wherein the carrier has a connection (2025) portion adapted for connecting a trailer (2040).

12. A system (1400) comprising
at least one transport module (1310) having a receiver portion (1330) adapted for receiving a support module (1320), the transport module comprising a raising mechanism adapted for raising the support module;
at least one support module (1320) adapted to fit in the receiver portion (1330) of the transport module and adapted to support loads to be transported.

13. The system (1400) according to claim 12, wherein the transport module (1310) and the support module (1320) have engaging mechanisms adapted for engaging with each other.

14. The system (1400) according to any of claims 12 to 13, wherein the transport module (1310) surrounds the support module (1320) at least partially and the raising mechanism is adapted for being positioned below at least a part of the support module.

15. The system (1400) according to any of claims 12 to 14, wherein the system comprises two transport modules (1310) and two support modules (1320) adapted for transporting one of the group consisting of a tower of a wind energy system, a nacelle of a wind energy system, a blade of a turbine, and a transformer, and adapted for raising the respective ends of the transported load with the respective one of the two transport and support modules.
